# EUROPEAN PATENT APPLICATION

(11) **EP 2 182 445 A2**
(43) Date of publication of application: **05.05.2010**
(21) Application number: 09252527.8
(22) Date of filing: 30.10.2009
(51) Int. Cl.: G06F 15/02, G06F 1/16

(54) **Electronic book with enhanced features**

(30) Priority: 04.11.2008 US 264598
(71) Applicant: Sony Corporation, Tokyo 108-0075 (JP); Sony Electronics, Inc., Park Ridge, NJ 07656 (US)
(72) Inventor: Milne, James R., Ramona, CA 92065 (US); Yasuhara, Trisha Ann Sachie, San Diego, CA 92102 (US)
(74) Representative: DeVile, Jonathan Mark

(57) **Abstract**

An electronic book can transfer book files to other cooperating electronic books using peer-to-peer principles and/or using wireless broadcast transfer principles. The electronic book can also automatically reformat a book file into a native format used by the book without user interaction. Additional electronic book features are also disclosed.

## Description

### Field of the Invention

The present invention relates generally to electronic books.

### Background of the Invention

Electronic books have been provided in which a person can read electronic book files stored on a storage medium in a compact, hand-held housing. Text is presented on a display of the housing, and more than a single electronic book can be stored on the storage medium. In this way, a person can in effect transport a large number of books for reading at the person's leisure in a single lightweight electronic book form factor. As recognized herein, such electronic books can be made even more convenient and user-friendly.

### SUMMARY OF THE INVENTION

Various aspects and features of the present invention are defined in the appended claims. In one example an electronic book includes a housing, a touch screen display supported on the housing, and one or more stylus holders on the housing for holding an elongated rigid stylus. A digital processor in the housing. A keyboard cord receptacle receives a connector of a cord of a keyboard such that the keyboard may be selectively engaged and disengaged with the housing as desired to enable a person to enter signals to the digital processor. A tangible computer-reader storage medium is in the housing and is accessible to the processor, and electronic book files are stored on the medium for presentation of text represented by the files on the display in a native format under control of the processor. Additionally, the processor selectively presents on the display a list of titles stored on the medium, command input elements to support communication with other electronic books, and an image of a keyboard for providing input to the processor using the display. The processor can access a first electronic book file on the medium in a format other than the native format, and automatically, without requiring user intervention, when the first electronic book file is selected by a user reformat the first electronic book file into the native format and then display the first electronic book file.

In another aspect, an electronic book includes a housing and an electronic touch screen display supported on the housing. A digital processor in the housing. Also, a tangible computer-reader storage medium is in the housing and is accessible to the processor, with electronic book files being stored on the medium for presentation of text represented by the files on the display in a native format under control of the processor. The processor accesses a first electronic book file on the medium in a format other than the native format and automatically, without requiring user intervention, when the first electronic book file is selected by a user reformats the first electronic book file into the native format and then displays the first electronic book file.

In another aspect, an electronic book includes a housing and an electronic touch screen display supported on the housing. A digital processor in the housing. Also, a tangible computer-reader storage medium is in the housing and is accessible to the processor. Electronic book files are stored on the medium for presentation of text represented by the files on the display in a native format under control of the processor. At least one wireless transceiver is supported by the housing and is controllable by the processor to transmit electronic book files on the medium to other electronic books. The processor presents on the display a list oftransmission protocols to use for selection of a protocol by a person for file transmission.

The details of the present invention, both as to its structure and operation, can best be understood in reference to the accompanying drawings, in which like reference numerals refer to like parts, and in which:

### BRIEF DESCRIPTION OF THE DRAWINGS

Embodiments of the present invention will now be described with reference to the accompanying drawings, where like parts have the same numerical designations and in which;
Figure 1 is a perspective view of an example electronic book in the closed configuration;
Figure 2 is a perspective view showing the electronic book of Figure 1 in the open configuration;
Figure 3 is a perspective view of an example electronic book with the processor, storage medium, and transceivers shown schematically;
Figure 4 is a flow chart of example file format conversion logic;
Figure 5 is a schematic diagram illustrating book transfer modalities between cooperating electronic books; and
Figure 6 is a flow chart of example book transfer logic.

### DETAILED DESCRIPTION OF THE PREFERRED EMBODIMENT

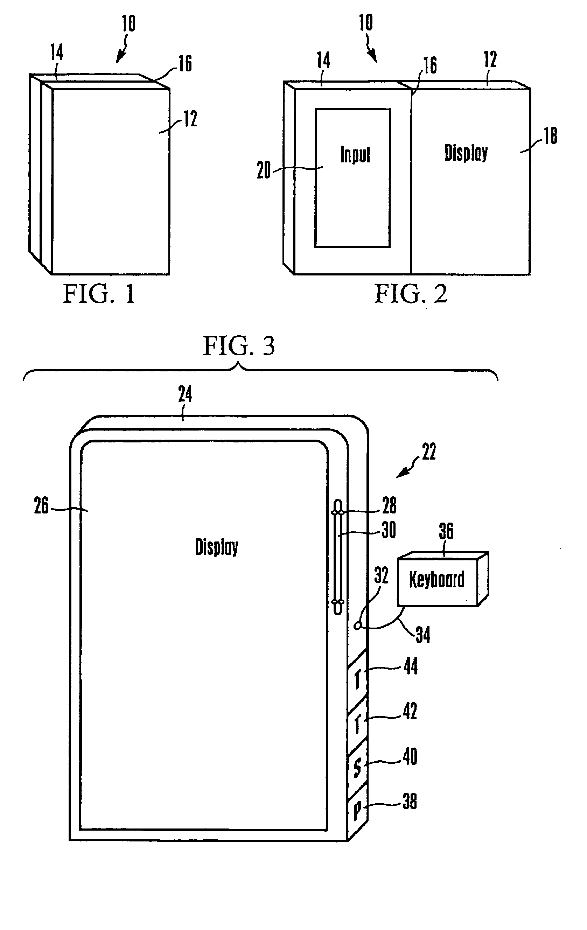

Referring initially to Figures 1 and 2, an example electronic book 10 is shown that can have, in one embodiment, a foldable configuration to mimic opening and closing a paper book. Specifically, the electronic book 10 may have a rigid lightweight plastic "cover" member 12 joined to a rigid lightweight plastic "back" member 14 along a hinge 16 for movement between an open configuration (Figure 2), wherein an electronic display 18 of the "cover" member 12 is exposed for viewing, and a closed configuration (Figure 1), wherein the display 18 is not exposed because it lies flush against the inside surface of the "back" member 14. If desired, an input device 20 such as a keyboard and/or mouse or other cursor control/point and click device may be provided on, e.g., the "back" member 14.

Figure 3 shows an example electronic book 22 that may not be foldable in contrast to the book 10 in Figures 1 and 2, it being understood that the book 10 shown in Figures 1 and 2 may incorporate the features of the electronic book 22 shown in Figure 3 in, e.g., the "cover" member 12 of the book 10. The electronic book 22 includes a lightweight portable plastic housing 24 bearing an electronic display 26 that may be a touch screen display. Accordingly, if desired the housing 24 may include one or more stylus holders 28 such as plastic clips for holding an elongated rigid typically plastic stylus 30, e.g., vertically on the housing with respect to the "top" and "bottom" of the housing, for use in inputting signals on the display 26 when it is a touch screen display. Without limitation the display 26 may be a liquid crystal display (LCD), light emitting diode display (LED), or other appropriate electronic display technology.

If desired, the housing 24 may be formed with a keyboard cord receptacle 32 for receiving a connector of a cord 34 of a keyboard 36. Thus, the keyboard 36 may be selectively engaged and disengaged with the housing 24 as desired to enable a person to enter signals to a digital processor 38 within the housing 24. In turn, the processor 38 can access a tangible computer-reader storage medium 40 such as but not limited to disk-based storage and/or solid state storage to execute logic herein. Electronic book files can also be stored on the medium 40. It is to be understood that the processor 38 controls the display 26 to present user interfaces including a list of titles stored on the medium 40, command input elements to support the book-to-book communication set forth below, book text from files on the medium 40, and when the display 26 is a touch screen display, an image of an input device such as a keyboard with which the user can input alpha-numeric signals using, e.g., the stylus 30.

In some embodiments the processor 38 may communicate with one or more wireless transceivers for purposes to be shortly divulged. In the embodiment shown in Figure 3, the processor 38 communicates with a long-range wireless transceiver 42 and a short-range wireless transceiver 44. Without limitation the short-range transceiver 44 may be a Bluetooth transceiver or other short-range high bandwidth transceiver technology and the long-range transceiver 42 may be a Wi-Fi transceiver or ultra wideband (UWB) transceiver or wireless telephony transceiver or other appropriate transceiver.

Using, e.g., the stylus 30 or other object a person may select a "highlight" selector presented on the display 26 to highlight text that is present on the display. Also, the person may enter handwritten notes in the "margins" of text presented on the display, with the processor 38 executing a handwriting recognition module stored on the medium 40 to generate and store electronic alpha-numeric characters representative of the handwriting in the relevant portion of the electronic book file. In this way, a person can annotate an electronic book with comments at the location in the book file to which the comments pertain.

Furthermore, "handedness" selectors may be presented on the display 26 which can be selected by a person to indicate "left handed" or "right handed". For example, a right-handed person may wish to hold the housing 24 upright as shown, whereas a left-handed user may wish to hold the housing 24 upside-down, in which case a selection of "left handed" would cause the text presented on the display 26 to be turned 180 degrees. The device may also be able to rotate 90 degrees in either direction to easily accommodate left-handed and right-handed users alike. Moreover, a user may be presented with a "negative" selector element on the display 26 which, if selected, causes text to be colored white and to be displayed on a black or other dark background. The user may also be presented with "larger" and "smaller" selector elements which, if selected, respectively cause text, graphics, tables, etc. that are part of an electronic book file to be enlarged and reduced.

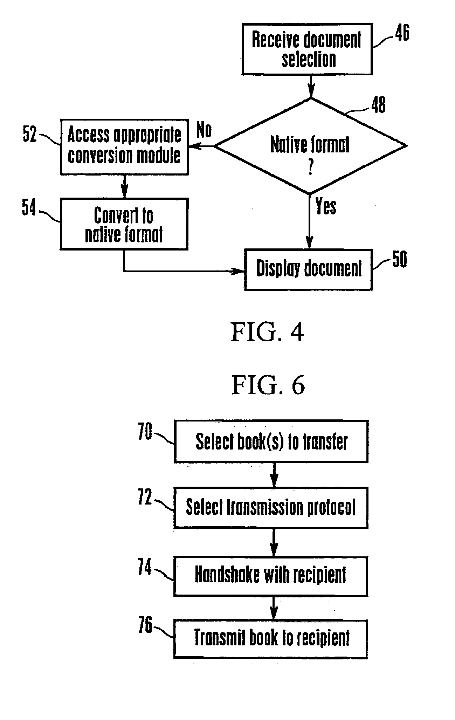

Turning to Figure 4, as understood herein the processor 38 may be programmed to display electronic book files that are presumed to be in a predetermined "native" format such as, for example, Acrobat^{™}. The present invention also understands that an electronic book file may be stored on the medium 40 in a format other than the native format, but that the non-native file preferably is displayed regardless and without requiring user intervention.

Accordingly, at block 46 a document selection is received by, e.g., receiving a selection of an available title on the medium 40 from a list presented on the display 26. If, at decision diamond 48, it is determined that the selected document is in the native format, the document is displayed at block 50. On the other hand, if the document is not in the native format, the processor determines what format the document is in and at block 52 automatically (without user prompt or command) accesses the appropriate conversion module for converting the document from its format into the native format. The conversion module may be stored on the medium 40. Using the conversion module at block 54, the processor converts the document into the native format for display at block 50.

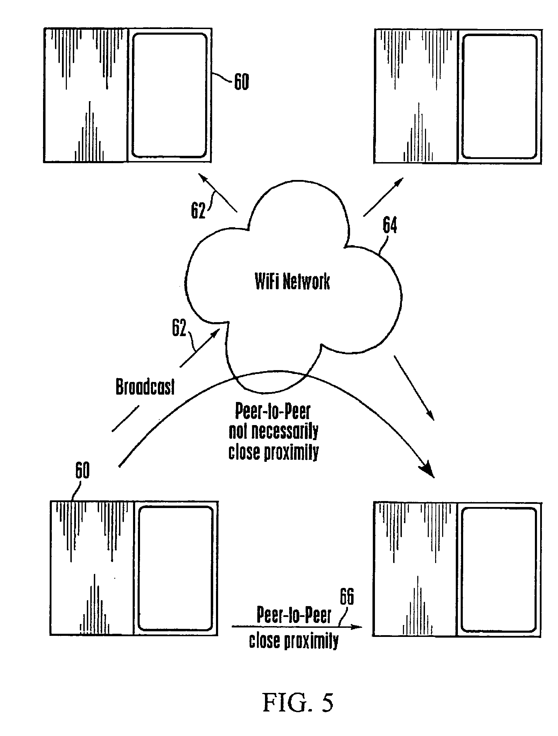

Figure 5 shows that one electronic book 60 such as one of the books 10 or 22 described above can share electronic book files with another electronic book 60 using peer-to-peer (P2P) principles and/or using broadcast transmission principles. Specifically, as shown by the line 62 the electronic books 60 may communicate with each other using a broadband wireless network 64 such as a Wi-Fi network of the Internet. Also, direct P2P file sharing may be undertaken with nearby electronic books without going through a network, as shown by the arrow 66. In the latter case, Bluetooth or other high-bandwidth short-range transmission protocol may be used to transfer an electronic book file from one electronic book 60 to another, whereas in the former case P2P or broadcast principles may be employed along with, e.g., Wi-Fi transmission protocol to share electronic book files through the network 64.

P2P file sharing without employing the network 64 may be effected when one electronic book 60 is in close proximity to another compliant device. A person may be presented with a list of protocols to use for selection of a protocol for file transmission. In this way if, for example, WiFi is not available the user might select to use a Bluetooth transceiver and protocol to share files with a nearby electronic book.

In the event that it is desired to send files to relatively distant electronic books, an electronic book 60 may broadcast book files using, e.g., a mailing list of recipient device Internet addresses. By selecting transfer using a mailing list, files from one book 60 to another or many books 60 can be sent, addressed to the respective Internet Protocol (IP) addresses, which may be addresses of a PC associated with a recipient and/or addresses of a book 60 that is present in, e.g., an active WiFi hot spot. Thus, each book 60 can have own IP address and if desired a PC IP address as a designated back up address, if the book 60 is not online.

Figure 6 illustrates the above principles in further detail. Commencing at block 70, a user can be selected with a list of titles that are available to be transferred to other books, if desired accounting for digital rights management (DRM) restrictions, along with desired recipients. Also, at block 72 the user may be presented with protocol selector elements to permit the user to select the desired transmission protocol, e.g., "Bluetooth", "WiFi",etc. If desired, at block 74 handshake principles may be employed with a desired recipient to ascertain that recipient is appropriately configured, e.g., is within Bluetooth range if Bluetooth is configured, is energized, etc. The selected book files are sent to the selected recipient addresses at block 76.

While the particular ELECTRONIC BOOK WITH ENHANCED FEATURES is herein shown and described in detail, it is to be understood that the subject matter which is encompassed by the present invention is limited only by the claims.

Various combinations can be made of the features of the dependent claims with those of the dependent claims other than that explicitly recited in the claim dependency of the attached claims.

Further example aspects and features of the present invention are defined in the following numbered clauses:
1. Electronic book comprising:
   a housing;
   an electronic touch screen display supported on the housing;
   a digital processor in the housing; and
   a tangible computer-reader storage medium in the housing and accessible to the processor, electronic book files being stored on the medium for presentation of text represented by the files on the display in a native format under control of the processor;
   the processor accessing a first electronic book file on the medium in a format other than the native format, and automatically, without requiring user intervention, when the first electronic book file is selected by a user, reformatting the first electronic book file into the native format and then displaying the first electronic book file.
2. The electronic book of clause 1, comprising at least one wireless transceiver supported by the housing and controllable by the processor.
3. The electronic book of clause 2, wherein using the transceiver the electronic book transmits at least one electronic book file to another electronic book using peer-to-peer (P2P) transmission principles without going through a network.
4. The electronic book of clause 2, wherein using the transceiver the electronic book transmits at least one electronic book file to another electronic book through a broadband network using broadcast transmission principles.
5. Electronic book comprising:
   a housing;
   an electronic touch screen display supported on the housing;
   a digital processor in the housing; and
   a tangible computer-reader storage medium in the housing and accessible to the processor, electronic book files being stored on the medium for presentation of text represented by the files on the display in a native format under control of the processor;
   at least one wireless transceiver supported by the housing and controllable by the processor to transm it at least one electronic book file on the medium to another electronic book, wherein the processor presents on the display a list of transmission protocols to use for selection of a protocol by a person for file transmission.
6. A method of displaying an electronic book file on an electronic book, the electronic book comprising:
   a housing;
   an electronic touch screen display supported on the housing;
   one or more stylus holders on the housing for holding an elongated rigid stylus;
   a digital processor in the housing;
   a keyboard cord receptacle for receiving a connector of a cord of a keyboard, whereby the keyboard may be selectively engaged and disengaged with the housing as desired to enable a person to enter signals to the digital processor;
   a tangible computer-reader storage medium in the housing and accessible to the processor, electronic book files being stored on the medium for presentation of text represented by the files on the display in a native format under control of the processor; the method comprising:
      selectively presenting on the display a list of titles stored on the medium, command input elements to support communication with other electronic books, and an image of a keyboard for providing input to the processor using the display; and
      accessing a first electronic book file on the medium in a format other than the native format, and automatically, without requiring user intervention, when the first electronic book file is selected by a user,
      reformatting the first electronic book file into the native format, and
      displaying the first electronic book file.

## Claims

1. Electronic book comprising:
a housing;
an electronic touch screen display supported on the housing;
one or more stylus holders on the housing for holding an elongated rigid stylus;
a digital processor in the housing;
a keyboard cord receptacle for receiving a connector of a cord of a keyboard, whereby the keyboard may be selectively engaged and disengaged with the housing as desired to enable a person to enter signals to the digital processor;
a tangible computer-reader storage medium in the housing and accessible to the processor, electronic book files being stored on the medium for presentation of text represented by the files on the display in a native format under control of the processor;
the processor selectively presenting on the display a list of titles stored on the medium, command input elements to support communication with other electronic books, and an image of a keyboard for providing input to the processor using the display; and
the processor accessing a first electronic book file on the medium in a format other than the native format, and automatically, without requiring user intervention, when the first electronic book file is selected by a user, reformatting the first electronic book file into the native format and then displaying the first electronic book file.

2. The electronic book of Claim 1, wherein the housing is foldable to mimic opening and closing a paper book.

3. The electronic book of Claim 1, wherein the stylus is held vertically on the housing with respect to a top edge and bottom edge of the housing.

4. The electronic book of Claim 1, comprising at least one wireless transceiver supported by the housing and controllable by the processor.

5. The electronic book of Claim 4, wherein the transceiver is a WiFi transceiver or ultra wideband (UWB) transceiver or wireless telephony transceiver.

6. The electronic book of Claim 4, wherein the transceiver is a Bluetooth transceiver.

7. The electronic book of Claim 4, wherein using the transceiver the electronic book transmits at least one electronic book file to another electronic book using peer-to-peer (P2P) transmission principles without going through a network.

8. The electronic book of Claim 4, wherein using the transceiver the electronic book transmits at least one electronic book file to another electronic book through a broadband network using broadcast transmission principles.

9. The electronic book of Claim 4, wherein the processor presents on the display a list of transmission protocols to use for selection of a protocol by a person for file transmission.

10. The electronic book of Claim 4, wherein the processor presents on the display a mailing list of recipient device Internet addresses selectable by a person to cause an electronic book file to be transferred to selected recipient devices.

11. The electronic book of Claim 1, wherein a person can use the stylus to highlight text that is present on the display.

12. The electronic book of Claim 1, wherein a person can use the stylus to enter handwritten notes in margins of text presented on the display, the processor executing a handwriting recognition module stored on the medium to generate and store electronic alpha-numeric characters representative of the handwriting in relevant portions of the electronic book file.

13. The electronic book of Claim 1, wherein the processor presents on the display handedness selectors which can be selected by a person to indicate "left handed" or "right handed" display preferences.

14. The electronic book of Claim 1, wherein the processor presents on the display a negative selector element which, if selected, causes the processor to color text white and to display the text on a black background.

15. The electronic book of Claim 1, wherein the processor presents on the display size selector elements for causing text and/or graphics that are part of an electronic book file to be enlarged and reduced.
